# EUROPÄISCHE PATENTSCHRIFT

(11) **EP 1 909 012 B1**
(45) Veröffentlichungstag und Bekanntmachung des Hinweises auf die Patenterteilung: **20.04.2016**
(21) Anmeldenummer: 07018505.3
(22) Anmeldetag: 20.09.2007
(51) Int. Cl.: F16L 5/04, F16L 59/02, F16L 59/14

(54) **Dämm-Manschette**
Insulation sleeve
Manchette isolante

(30) Priorität: 02.10.2006 DE 202006015100 U
(43) Veröffentlichungstag der Anmeldung: 09.04.2008
(73) Patentinhaber: Kolektor Missel Insulations GmbH, 70736 Fellbach (DE)
(72) Erfinder:
(74) Vertreter: Manitz, Finsterwald & Partner GbR

(56) Entgegenhaltungen:
- EP-A1- 0 486 299
- DE-U1- 29 824 901
- GB-A- 2 342 136
- US-A- 1 611 907
- US-A- 4 018 962
- US-A- 4 265 953
- US-A- 5 038 693
- US-A- 5 887 396
- US-A1- 2003 208 976

## Beschreibung

Die vorliegende Erfindung betrifft eine Dämm-Manschette für Rohre und Kanäle nach dem Oberbegriff des Anspruchs 1.

Bei einer solchen, beispielsweise aus der DE 197 30 153 A1 oder aus der DE 298 24 901 U1 bekannten, Dämm-Manschette kann für einen verbesserten Brandschutz in einer Mittelschicht eine Lage aus sich bei Hitzeeinwirkung aufblähendem Material vorgesehen sein, um im Brandfalle Rohrdurchführungen im Mauerwerk gegen Feuer und Rauchübertragung abdichtend zu verschließen.

Ähnliche Dämm-Manschetten sind aus der US 4,018,962 A, EP 0 486 299 A1, US 5,887,396 A, GB 2 342 136 A oder aus der US 4,265,953 A bekannt.

Es ist die Aufgabe der vorliegenden Erfindung, eine Dämm-Manschette für einen verbesserten Brandschutz zu schaffen, die besonders einfach und kostengünstig herstellbar ist.

Die Lösung dieser Aufgabe erfolgt durch die Merkmale des Anspruchs 1. Erfindungsgemäß wird somit als aufblähendes Material ein Streifen eingesetzt, der nicht ganzflächig sondern nur an einem Ende oder an beiden Enden mit dem Dämmstreifen verbunden ist, und der nachfolgend als separater Streifen bezeichnet wird. Auf diese Weise ist es nicht erforderlich, das aufblähende Material in die Dämm-Manschette zu integrieren. Vielmehr muss der separate Streifen lediglich an einer, oder zwei gegenüberliegenden Stellen mit dem Dämmstreifen verbunden werden. Hierdurch ist eine besonders kostengünstige Herstellung der Dämm-Manschette möglich, da sowohl der Dämmstreifen wie auch der separate Streifen aus flächigem Material hergestellt werden können. Auch ist das Anbringen der erfindungsgemäßen Dämm-Manschette an einer Rohrleitung auf genau so einfache Weise möglich, wie wenn das aufblähende Material in den Dämmstreifen integriert wäre.

Wenn der separate Streifen an nur einer Seite mit dem Dämmstreifen verbunden ist, ist eine besonders kostengünstige Herstellung möglich. Eine Verbindung des separaten Streifens an nur zwei gegenüberliegenden Seiten kann dafür sorgen, dass ein Abreißen oder Verschieben des separaten Streifens verhindert ist, wobei dennoch eine kostengünstige Herstellung gewährleistet ist.

Vorteilhafte Ausführungsformen der Erfindung sind in der Beschreibung, der Zeichnung sowie den Unteransprüchen beschrieben.

Nach einer ersten vorteilhaften Ausführungsform kann der separate Streifen an einer Innenseite des Dämmstreifens befestigt sein. Bei dieser Ausführungsform, die sich insbesondere für vergleichsweise dünne Streifen aus aufblähendem Material mit einer Dicke von wenigen Millimetern aber auch für Materialien mit einer etwas größeren Dicke, beispielsweise in der Größenordnung von 8 bis 12 mm eignet, wird der separate Streifen durch den Dämmstreifen geschützt, nachdem die Dämm-Manschette an ein Rohr oder einen Kanal angelegt ist. Hierbei ist es vorteilhaft, wenn der separate Streifen kürzer als der Dämmstreifen ist, da hierdurch ein Überlappen der beiden Enden des separaten Streifens verhindert werden kann. Die Länge des separaten Streifens kann so gewählt werden, dass dieser nach Anlegen der Dämm-Manschette an ein Rohr mit einem vorbestimmten Durchmesser dieses Rohr vollständig umgibt, ohne dabei jedoch zu überlappen, so dass die Dämm-Manschette nach Anlegen an ein Rohr eine gleichmäßige Dicke entlang ihres Umfangs aufweist.

Nach einer weiteren vorteilhaften Ausführungsform kann der separate Streifen an einer Außenseite des Dämmstreifens befestigt sein. Diese Ausführungsform eignet sich insbesondere für separate Streifen aus aufblähendem Material mit einer etwas größeren Dicke, beispielsweise in der Größenordnung von 8 bis 12 mm. Bei dieser Ausführungsform kann es auch vorteilhaft sein, wenn der separate Streifen länger als der Dämmstreifen ist, da in diesem Fall der separate Streifen, insbesondere wenn er ebenfalls mit einem Verschlussmittel versehen ist, um die bereits verschlossene Dämm-Manschette herumgelegt und anschließend verschlossen werden kann. Bevorzugt wird hierbei die Länge des separaten Streifens so gewählt, dass dieser für einen vorbestimmten Rohrdurchmesser die angelegte und verschlossene Dämm-Manschette entlang ihres Umfangs vollständig umgibt, ohne dabei jedoch zu überlappen.

Nach einer weiteren vorteilhaften Ausführungsform kann der separate Streifen von einer Schutzhülle umschlossen sein, um das aufblähende Material vor Feuchtigkeit und/oder Beschädigungen auf der Baustelle zu schützen. Besonders vorteilhaft ist hier eine Schutzhülle in Form eines reißfesten Überzugs, insbesondere einer Gewebefolie mit Gitterstruktur. Hierbei ist es besonders vorteilhaft, wenn die Schutzhülle etwas länger als der separate Streifen ausgebildet wird, so dass eine Lasche gebildet ist, die als Verschlussmittel dient. Mit anderen Worten überlappt nach Anlegen der Dämm-Manschette nur die Lasche der Schutzhülle mit dem separaten Streifen.

Als Verschlussmittel für die Dämm-Manschette und/oder für den separaten Streifen können übliche Verschlussmittel, wie beispielsweise Klemmoder Klebverschlüsse, Haken und Ösen oder Druckknöpfe vorgesehen werden. Besonders bewährt haben sich jedoch Klettverschlüsse.

Die Befestigung des separaten Streifens an dem Dämmstreifen kann grundsätzlich beliebig erfolgen. Besonders vorteilhaft ist jedoch ein Annähen oder Antackern des separaten Streifens, da dies kostengünstig und schnell erfolgen kann. Wesentlich ist lediglich, dass der separate Streifen in Umfangsrichtung gesehen nur an zumindest einem Ende bzw. nur an zumindest einer Schmalseite mit dem Dämmstreifen verbunden ist. Bei Vorsehen einer linienförmigen Verbindungsstelle zwischen dem separaten Streifen und dem Dämmstreifen lässt sich eine besonders gute Verbindung mit niedrigen Kosten erzielen.

Wenn der der separate Streifen aus Blähmaterial etwa halb so breit wie der Dämmstreifen ist, lässt sich die Verwendung des vergleichsweise teueren Blähmaterial minimieren, wobei sich mit einem solchen Breitenverhältnis in der Praxis dennoch gute Ergebnisse erzielen ließen.

Der Dämmstreifen kann eine Dicke im Bereich von etwa 4-15 mm aufweisen und der separate Streifen aus Blähmaterial kann eine Dicke im Bereich von etwa 2-12 mm aufweisen. Mit anderen Worten lassen sich gute Ergebnisse erzielen, wenn das Dickenverhältnis zwischen der Dicke des Dämmstreifens und der Dicke des separaten Streifens etwa 1:1 beträgt.

Schließlich ist auch erwähnenswert, dass erfindungsgemäß auf einen bisher üblichen Blechmantel oder dergleichen verzichtet werden kann, da die Blähkräfte von dem Mauerwerk aufgenommen werden.

Nach einer weiteren vorteilhaften Ausführungsform kann die Dämm-Manschette mehrere übereinander angeordnete separate Streifen aufweisen, wobei insbesondere die Länge der separaten Streifen mit zunehmendem Abstand von dem Dämmstreifen entweder zu- oder abnimmt. Wenn die separaten Streifen auf der Innenseite des Dämmstreifens befestigt sind, ist es vorteilhaft, wenn die Länge der separaten Streifen mit zunehmendem Abstand von dem Dämmstreifen abnimmt. In diesem Fall kann jeder separate Streifen in der Länge so dimensioniert werden, dass bei Anlegen der Dämm-Manschette an ein Rohr mit vorbestimmtem Durchmesser der jeweilige separate Streifen um das Rohr herumgelegt werden kann, ohne zu überlappen oder zwischen den Enden des Streifens einen nennenswerten Abstand zu bilden. Umgekehrt kann auch die Länge der separaten Streifen mit zunehmendem Abstand von den Dämmstreifen zunehmen, wenn die separaten Streifen an der Außenseite des Dämmstreifens befestigt sind. In beiden Fällen kann dafür gesorgt werden, dass die separaten Streifen nicht überlappen, sondern im Wesentlichen nahtlos um das Rohr herumgelegt werden können, wenn die Dämm-Manschette an das Rohr angelegt ist.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine perspektivische Ansicht einer ersten Ausführungsform einer Dämm-Manschette im flächigen Zustand; und
- Fig. 2: eine perspektivische Ansicht einer zweiten Ausführungsform einer Dämm-Manschette, die an ein Rohr angelegt ist.

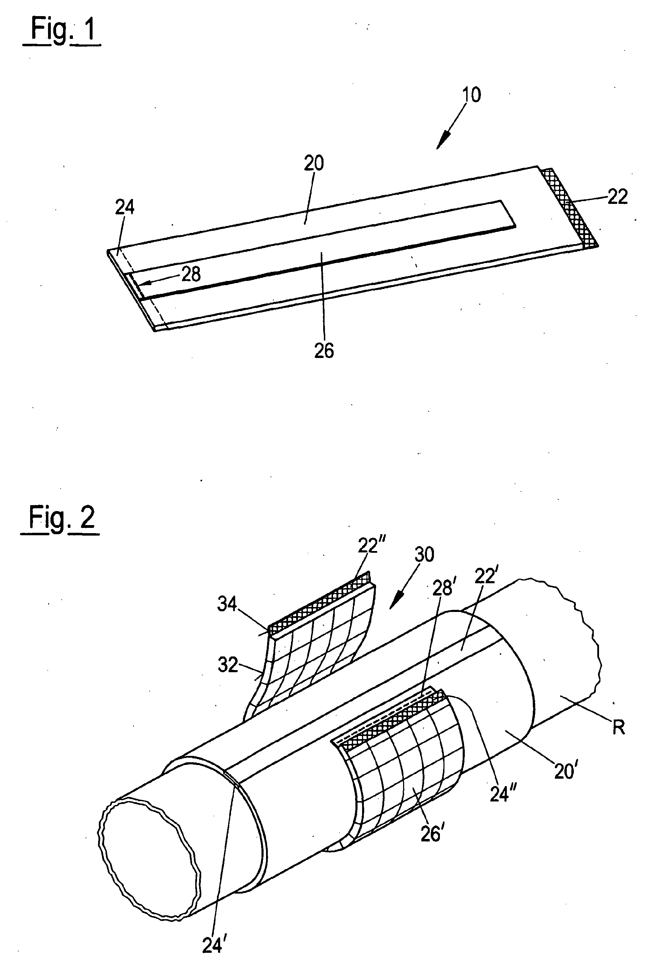

Die in Fig. 1 dargestellte erste Ausführungsform einer Dämm-Manschette 10 besteht aus einem Dämmstreifen 20 aus flächigem Material, das körperschalldämmend und wärmedämmend ist. Beispielsweise kann der Dämmstreifen so ausgebildet sein, wie es in der DE 197 30 153 A1 der Anmelderin beschrieben ist, deren Inhalt durch Bezugnahme ausdrücklich zum Gegenstand dieser Offenbarung gemacht wird. Bei einem solchen Dämmstreifen kann ein nicht brennbares Vlies aus mineralischen Fasern mit oder auch ohne Kaschierungen vorgesehen sein, wobei die Dicke eines solchen Dämmstreifens etwa 2 bis 20 mm betragen kann. Auch ist es möglich, einen Kunststoffverbund vorzusehen, wobei auf bekannte Weise eine äußere Schutzschicht für den Verbund vorgesehen werden kann.

Grundsätzlich kommen als Materialien für den Dämmstreifen 10 sämtliche bekannten Materialien bzw. Materialverbünde in Frage. Wesentlich ist lediglich, dass der Dämmstreifen so elastisch bzw. anschmiegsam ist, dass er in flächiger Form gelagert und transportiert und erst auf der Baustelle an ein Rohr oder einen Kanal angelegt werden kann.

Der Dämmstreifen 20 ist auf bekannte Weise mit einem Verschlussmittel verschließbar, das bei der dargestellten Ausführungsform aus einem Klettverschluss besteht. In Fig. 1 ist am rechten Ende des Dämmstreifens 20 ein Verschlussteil 22 dieses Klettverschlusses erkennbar. Am entgegengesetzten Ende des Dämmstreifens 20 ist das korrespondierende Verschlussteil 24 gestrichelt angedeutet, da sich dieses an der Außenseite der Dämmstreifen 20 befindet, die in Fig. 1 nicht erkennbar ist.

An der in Fig. 1 erkennbaren Innenseite des Dämmstreifens 10 ist ein sich bei Hitzeeinwirkung aufblähendes Material vorgesehen und zwar in Form eines separaten Streifens 26, der etwa halb so breit und kürzer wie der Dämmstreifen 20 ist. Der separate Streifen 26 ist mit einer linienförmigen Näh- oder Tackerverbindung (Klammerverbindung) 28 an dem Dämmstreifen 20 so befestigt, dass im Bereich des linken Endes des Dämmstreifens der Dämmstreifen 20 und der separate Streifen 26 im Wesentlichen bündig aneinander anliegen. Ansonsten ist der separate Streifen 26 nicht mit dem Dämmstreifen 20 verbunden.

Die in Fig. 1 dargestellte Dämm-Manschette 10 kann auf einfache Weise um ein Rohr oder einen Kanal gewickelt und anschließend mit Hilfe des Klettverschlusses 22, 24 verschlossen werden. Hierbei ist der separate Streifen 26 durch den Dämmstreifen 20 geschützt. Die Länge des separaten Streifens 26 ist dabei so gewählt, dass dieser nach Anlegen der Dämm-Manschette an ein Rohr mit einem vorbestimmten Durchmesser dieses Rohr entlang des Umfangs vollständig umgibt, ohne dabei zu überlappen. Es überlappen lediglich die beiden Enden der Dämm-Manschette 10, an denen sich die Verschlussteile 22 und 24 befinden.

Fig. 2 zeigt eine zweite Ausführungsform einer Dämm-Manschette 30 mit einem Dämmstreifen 20', der aus den gleichen Materialien wie bei der ersten Ausführungsform gebildet sein kann. Der in Fig. 2 dargestellte Dämmstreifen 20' besteht ebenfalls aus flächigem Material, ist jedoch in der Darstellung der Fig. 2 bereits um ein Rohr R herumgewickelt und mit Hilfe eines Klettverschlusses 22', 24' verschlossen.

Bei dieser Ausführungsform ist ebenfalls ein separater Streifen 26' aus bei Hitzeeinwirkung aufblähendem Material vorgesehen, der an nur einer Seite mit dem Dämmstreifen 20' verbunden ist. Allerdings ist der separate Streifen 26' bei dieser Ausführungsform an der Außenseite des Dämmstreifens 20' befestigt, so dass dieser erst nach Anlegen des Dämmstreifens 20' ebenfalls um das Rohr R herumgewickelt und verschlossen werden kann.

Der separate Streifen 26' ist bei dieser Ausführungsform von einer Schutzhülle 32 umgeben, die aus einer Kunststofffolie mit verstärkender Gitterstruktur gebildet ist, die zu einer Umhüllung geformt ist. Hierbei ist die Umhüllung entlang einer Verbindungslinie 28' mit dem Dämmstreifen 20' vernäht. Am entgegengesetzten Ende des separaten Streifens 26' ist die Schutzhülle 32 zu einer Lasche 34 verlängert, an deren Innenseite sich ein erster Verschlussteil 22" eines Klettverschlusses befindet. Das korrespondierende Verschlussteil 24" ist am entgegengesetzten Ende des separaten Streifens 26' an der Oberseite der Schutzhülle 32 durch Nähen befestigt.

Auch bei dieser Ausführungsform ist die Länge des separaten Streifens 26' so gewählt, dass dieser nach Anlegen an ein Rohr mit vorbestimmtem Durchmesser dieses entlang des Umfangs vollständig umgibt, ohne dabei zu überlappen. Bei dieser Ausführungsform überlappt lediglich die Lasche 34, d.h. das Verschlussteil 22" mit dem Verschlussteil 24".

Die vorstehend beschriebene Dämm-Manschette eignet sich für Kunststoffrohrleitungen (z.B. aus PP, PE, PVC, PB, ABS) aber auch für mineralverstärkte dickwandige Kunststoffrohre und Kunststoffverbundrohre aber auch für Metallrohre, bei denen im Brandfall der Restspalt gegen Feuer- und Rauchübertragung verschlossen werden kann.

Das sich Hitzeeinwirkung aufblähende Material sollte im Brandfall bei ca. 100 bis 200°C aufschäumen und kann brennbar oder auch nicht brennbar sein. Die Dicke des separaten Streifens kann etwa 2 bis 12 mm betragen.

Neben der beiden vorstehend beschriebenen Ausführungsformen, bei denen der separate Streifen nur an einer Seite mit dem Dämmstreifen verbunden ist, können auch Ausführungsvarianten vorgesehen werden, bei denen separate Streifen oder die separaten Streifen an zwei gegenüberliegenden Seiten mit dem Dämmstreifen verbunden ist bzw. sind. Bei der in Fig. 1 dargestellten Ausführungsform würde dann an dem in Fig. 1 rechten Ende des separaten Streifens 26 eine weitere Näh- öder Täckerverbindung vorgesehen werden, die parallel zu der Verbindung 28 ausgebildet ist. Um dabei ein ordnungsgemäßes Anlegen der Dämm-Manschette an ein Rohr zu ermöglichen, müsste die Verbindung so gewählt werden, dass die Dämm-Manschette nach dem vollständigen Verbinden des separaten Streifens 26 mit dem Dämmstreifen 20 bereits eine gekrümmte Gestaltung annimmt.

Das vorstehend Gesagte gilt auch in Hinblick auf die Ausführungsform der Fig. 2, d.h. auch dort kann der separate Streifen an zwei gegenüberliegenden Seiten mit dem Dämmstreifen verbunden sein.

## Patentansprüche

1. Dämm-Manschette (10, 30) für Rohre und Kanäle, die aus einem Dämmstreifen (20) aus flächigem Material besteht, das körperschalldämmend und wärmedämmend ist, wobei der Dämmstreifen (20, 20') um das Rohr oder den Kanal gewickelt werden kann und mit einem Verschlussmittel (22, 24; 22', 24') der Dämm-Manschette verschließbar ist, und wobei die Manschette (10, 30) ein sich bei Hitzeeinwirkung aufblähendes Material aufweist,
**dadurch gekennzeichnet, dass**
das sich bei Hitzeeinwirkung aufblähende Material als separater Streifen (26, 26') ausgebildet ist, der nicht ganzflächig sondern entweder nur an seinem einen Ende, oder nur an seinen zwei gegenüberliegenden Enden, mit dem Dämmstreifen (20, 20') verbunden ist.

2. Dämm-Manschette nach Anspruch 1, **dadurch gekennzeichnet, dass** der Streifen (26) an einer Innenseite des Dämmstreifens (20) befestigt ist.

3. Dämm-Manschette nach Anspruch 2, **dadurch gekennzeichnet, dass** der Streifen (26) kürzer als der Dämmstreifen (20) ist.

4. Dämm-Manschette nach Anspruch 1, **dadurch gekennzeichnet, dass** der Streifen (26') an einer Außenseite des Dämmstreifens (20') befestigt ist.

5. Dämm-Manschette nach Anspruch 4, **dadurch gekennzeichnet, dass** der Streifen (26') länger als der Dämmstreifen (20') ist.

6. Dämm-Manschette nach einem der Ansprüche 4 oder 5, **dadurch gekennzeichnet, dass** der Streifen (26') mit einem Verschlussmittel (22", 24") versehen ist.

7. Dämm-Manschette nach zumindest einem der vorstehenden Ansprüche, **dadurch gekennzeichnet, dass** der Streifen (26, 26') von einer Schutzhülle (32) umschlossen ist, die insbesondere aus einer Folie, insbesondere aus PE oder PP besteht.

8. Dämm-Manschette nach einem der vorhergehenden Ansprüche, **dadurch gekennzeichnet, dass** der Dämmstreifen (20, 20') und/oder der Streifen (26') einen reißfesten Überzug, insbesondere eine Gewebefolie mit Gitterstruktur, aufweist.

9. Dämm-Manschette nach einem der vorhergehenden Ansprüche, **dadurch gekennzeichnet, dass** das Verschlussmittel, einen Klemm-, Kleb- oder Klettverschluss (22, 24, 22', 24'; 22", 24"), oder Haken und Ösen oder Druckknöpfe aufweist.

10. Dämm-Manschette nach einem der vorhergehenden Ansprüche, **dadurch gekennzeichnet, dass** der Streifen (26, 26') an den Dämmstreifen (20, 20') genäht oder getackert ist.

11. Dämm-Manschette nach einem der vorhergehenden Ansprüche, **dadurch gekennzeichnet, dass** die Verbindungsstelle (28, 28') zwischen dem Streifen und dem Dämmstreifen linienförmig ist.

12. Dämm-Manschette nach einem der vorhergehenden Ansprüche, **dadurch gekennzeichnet, dass** der Streifen (26, 26') etwa halb so breit wie der Dämmstreifen (20, 20') ist.

13. Dämm-Manschette nach einem der vorhergehenden Ansprüche, **dadurch gekennzeichnet, dass** das Dickenverhältnis zwischen der Dicke des Dämmstreifens (20, 20') und der Dicke des Streifens etwa 1:1 beträgt.

14. Dämm-Manschette nach einem der vorhergehenden Ansprüche, **dadurch gekennzeichnet, dass** diese keinen Blechmantel aufweist.

15. Dämm-Manschette nach einem der vorhergehenden Ansprüche, **dadurch gekennzeichnet, dass** mehrere übereinander angeordnete Streifen (26, 26') vorgesehen sind, wobei insbesondere die Länge der Streifen mit zunehmendem Abstand von dem Dämmstreifen (20, 20') zu- oder abnimmt.

## Claims

1. An insulating sleeve (10, 30) for pipes and ducts which comprises an insulating strip (20) of planar material which insulates against structure-borne noise and is heat-insulating, wherein the insulating strip (20, 20') can be wound around the pipe or the duct and is closable by a closure means (22, 24; 22', 24') of the insulating sleeve; and wherein the sleeve (10, 30) comprises a material which swells under the effect of heat,
**characterized in that**
the material swelling under the effect of heat is configured as a separate strip (26, 26') which is not connected to the insulating strip (20, 20') over its whole area, but rather either only at its one end or only at its two oppositely disposed ends.

2. An insulating sleeve in accordance with claim 1, **characterized in that** the strip (26) is fastened to an inner side of the insulating strip (20).

3. An insulating sleeve in accordance with claim 2, **characterized in that** the strip (26) is shorter than the insulating strip (20).

4. An insulating sleeve in accordance with claim 1, **characterized in that** the strip (26') is fastened to an outer side of the insulating strip (20').

5. An insulating sleeve in accordance with claim 4, **characterized in that** the strip (26') is longer than the insulating strip (20').

6. An insulating sleeve in accordance with one of the claims 4 or 5, **characterized in that** the strip (26') is provided with a closure means (22", 24").

7. An insulating sleeve in accordance with at least one of the preceding claims, **characterized in that** the strip (26, 26') is surrounded by a protective cover (32) which in particular consists of a film, in particular of PE or PP.

8. An insulating sleeve in accordance with any one of the preceding claims, **characterized in that** the insulating strip (20, 20') and/or the strip (26') has a tear-proof coat, in particular a fabric foil having a mesh structure.

9. An insulating sleeve in accordance with any one of the preceding claims, **characterized in that** the closure means comprises a clamping closure, an adhesive closure or a hook-and-loop fastener (22, 24, 22', 24'; 22", 24") or hooks and eyes or snap fasteners.

10. An insulating sleeve in accordance with any one of the preceding claims, **characterized in that** the strip (26, 26') is sewn or stapled to the insulating strip (20, 20').

11. An insulating sleeve in accordance with any one of the preceding claims, **characterized in that** the junction (28, 28') between the strip and the insulating strip is line shaped.

12. An insulating sleeve in accordance with any one of the preceding claims, **characterized in that** the strip (26, 26') is approximately half as wide as the insulating strip (20, 20').

13. An insulating sleeve in accordance with any one of the preceding claims, **characterized in that** the thickness ratio between the thickness of the insulating strip (20, 20') and the thickness of the strip amounts to approximately 1:1.

14. An insulating sleeve in accordance with any one of the preceding claims, **characterized in that** it does not have a sheet-metal jacket.

15. An insulating sleeve in accordance with any one of the preceding claims, **characterized in that** a plurality of strips (26, 26') are provided which are arranged above one another, with the length of the strips in particular increasing or decreasing with an increasing distance from the insulating strip (20, 20').

## Revendications

1. Manchette isolante (10, 30) pour tubes et canalisations, qui est constituée par un ruban isolant (20) en matériau surfacique, qui a pour effet d'isoler vis-à-vis des bruits structurels et de la chaleur, dans laquelle le ruban isolant (20, 20') peut être enroulé autour du tube ou de la canalisation et peut être fermé avec un moyen de fermeture (22, 24 ; 22', 24') de la manchette isolante, et ladite manchette (10, 30) comprend un matériau qui gonfle sous l'effet de la chaleur,
**caractérisée en ce que**
le matériau qui gonfle sous l'effet de la chaleur est réalisé sous la forme d'un ruban séparé (26, 26'), qui est relié au ruban isolant (20, 20') non pas sur toute sa surface mais soit seulement à l'une de ses extrémités soit seulement à ses deux extrémités opposées.

2. Manchette isolante selon la revendication 1, **caractérisée en ce que** le ruban (26) est fixé sur une face intérieure du ruban isolant (20).

3. Manchette isolante selon la revendication 2, **caractérisée en ce que** le ruban (26) est plus court que le ruban isolant (20).

4. Manchette isolante selon la revendication 1, **caractérisée en ce que** le ruban (26') est fixé sur une face extérieure du ruban isolant (20').

5. Manchette isolante selon la revendication 4, **caractérisée en ce que** le ruban (26') est plus long que le ruban isolant (20').

6. Manchette isolante selon l'une des revendications 4 ou 5, **caractérisée en ce que** le ruban (26') est doté d'un moyen de fermeture (22', 24').

7. Manchette isolante selon l'une au moins des revendications précédentes, **caractérisée en ce que** le ruban (26, 26') est entouré par une enveloppe protectrice (32), qui est en particulier constituée par une feuille, en particulier en PE ou en PP.

8. Manchette isolante selon l'une des revendications précédentes, **caractérisée en ce que** le ruban isolant (20, 20') et/ou le ruban (26') comporte un revêtement résistant aux déchirures, en particulier une feuille textile avec structure grillagée.

9. Manchette isolante selon l'une des revendications précédentes, **caractérisée en ce que** le moyen de fermeture comprend une fermeture par serrage, par collage ou une fermeture agrippante (22, 24, 22', 24' ; 22", 24"), ou encore des crochets et des oeillets ou des boutons-pression.

10. Manchette isolante selon l'une des revendications précédentes, **caractérisée en ce que** le ruban (26, 26') est cousu ou agrafé sur le ruban isolant (20, 20').

11. Manchette isolante selon l'une des revendications précédentes, **caractérisée en ce que** l'emplacement de liaison (28, 28') entre le ruban et le ruban isolant est de forme linéaire.

12. Manchette isolante selon l'une des revendications précédentes, **caractérisée en ce que** le ruban (26, 26') a approximativement la moitié de la largeur du ruban isolant (20, 20').

13. Manchette isolante selon l'une des revendications précédentes, **caractérisée en ce que** le rapport d'épaisseur entre l'épaisseur du ruban isolant (20, 20') et l'épaisseur du ruban s'élève à environ 1:1.

14. Manchette isolante selon l'une des revendications précédentes, **caractérisée en ce que** celle-ci ne comporte aucune enveloppe en tôle.

15. Manchette isolante selon l'une des revendications précédentes, **caractérisée en ce qu'**il est prévu plusieurs rubans (26, 26') agencés les uns au-dessus des autres, et dans laquelle en particulier la longueur des rubans augmente ou diminue lorsque la distance depuis le ruban isolant (20, 20') augmente.
